(19) Europäisches Patentamt
European Patent Office
Office européen des brevets

(11) EP 3 923 038 A1

(12) EUROPEAN PATENT APPLICATION

(43) Date of publication:
**15.12.2021 Bulletin 2021/50**

(51) Int Cl.:
***G02B 1/04*** *(2006.01)* ***C09D 183/06*** *(2006.01)*

(21) Application number: **20305617.1**

(22) Date of filing: **09.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ESSILOR INTERNATIONAL**
**94220 Charenton-Le-Pont (FR)**

(72) Inventors:
- **LAVAL, Gautier**
  **94220 CHARENTON-LE-PONT (FR)**
- **CRETIER, Annette**
  **94220 CHARENTON-LE-PONT (FR)**
- **LECHANTRE, Stephanie**
  **94220 CHARENTON-LE-PONT (FR)**
- **PANCHOUT, Xavier**
  **94220 CHARENTON-LE-PONT (FR)**
- **MARTIN, Joseph**
  **94220 CHARENTON-LE-PONT (FR)**

(74) Representative: **Jacobacci Coralis Harle**
**32, rue de l'Arcade**
**75008 Paris (FR)**

# (54) OPTICAL ARTICLE WITH A DURABILITY IMPROVED HARD COATING

(57) The present invention relates to an optical article comprising a substrate having at least one main surface coated with a coating comprising at least one layer of an abrasion and/or scratch-resistant coating, wherein the abrasion and/or scratch-resistant coating is formed from a composition comprising at least one epoxy compound bearing at least one silicon atom having at least one hydrolysable group directly linked to the silicon atom and at least one group comprising an epoxy function linked to the silicon atom through a carbon atom, and/or a hydrolysate thereof, at least one plasticizer, a silane hydrolysate and colloidal silica, wherein the total amount of plasticizer in the composition is lower than 10wt% of the dry extract of the total composition, and wherein the weight ratio of silane of formula (I) to plasticizer is higher than 0.4 in the dry exact of the composition. The invention further relates to a process for the manufacture of such an abrasion and/or scratch-resistant coating on a substrate.

EP 3 923 038 A1

**Description**

TECHNICAL FIELD OF THE INVENTION

The invention relates to an optical article comprising a substrate having at least one main surface coated with a coating comprising at least one layer of an abrasion and/or scratch-resistant coating.

More precisely the invention relates to an optical article comprising a coating comprising at least one layer of an abrasion and/or scratch-resistant coating, the coating presenting an improved durability and a lowered risk of fracturing throughout wear. The abrasion and/or scratch-resistant coating of the optical article of the invention is also convenient for its use in combination with a REACH compliant primer coating.

BACKGROUND INFORMATION AND PRIOR ART

Numerous documents describe optical articles comprising an abrasion and/or scratch-resistant coating. Said coatings are typically made of stacks of layers of different materials, providing the optical article with interesting mechanical properties. Nevertheless, some wearer tests have highlighted problems of durability of some classical hard coating stacks, resulting in fracturing of the abrasion and/or scratch-resistant coating throughout wear. The appearance of such fracturing may be linked to the strain undergone by mounted lenses under certain conditions of humidity and temperature.

Some solutions to this fracturing problem have been developed, such as the use of a primer layer comprising polyurethane and particulate silica in combination with an abrasion and/or scratch-resistant coating, as disclosed in WO2013/004954. Such coating comprises dimethyldiethoxysilane and presents a low risk of fracturing throughout wear. Nevertheless, the primer to be used in combination with this coating in order to reach the desired crack-resistance properties is not REACH compliant as it involves provision of polyurethane in a solution comprising non-REACH compliant solvents such as 1-methyl-2-pyrrolidone as described for instance in US 6,187,444. REACH compliance is an important problematic nowadays in order to secure the manufacturing process and the use of articles, such as optical articles, which manufacturing process implies the use of chemicals.

It would thus be desirable to develop coatings affording a high durability and a low risk of fracturing throughout wear to the optical articles. Advantageously, the improved mechanical properties should be obtained even when the coating is used with a REACH-compliant primer coating.

SUMMARY OF THE INVENTION

Therefore, one object of the invention is an optical article comprising a substrate having at least one main surface coated with a coating comprising at least one layer of an abrasion and/or scratch-resistant coating, wherein the abrasion and/or scratch-resistant coating is formed from a composition comprising :

(a) at least one epoxy compound bearing at least one silicon atom having at least one hydrolysable group directly linked to the silicon atom and at least one group comprising an epoxy function linked to the silicon atom through a carbon atom, and/or a hydrolysate thereof,

(b) at least one plasticizer,

(c) a silane hydrolysate having formula (I):

(I)

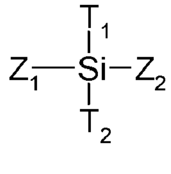

wherein $T_1$ and $T_2$ are groups which will each react to give a OH group on hydrolysis of the silane of formula (I),

$Z_1$ and $Z_2$ are organic groups bonded to the silicon atom by a Si-C bond which do not contain a group capable of reacting with the hydrolyzed silanes present in the composition, and

(d) colloidal silica,

wherein the total amount of plasticizer in the composition is lower than 10wt% of the dry extract of the total composition, and

wherein the weight ratio of silane of formula (I) to plasticizer is higher than 0.4 in the dry exact of the composition.

The abrasion and/or scratch-resistant coating provides the optical article according to the invention with a lowered risk of fracturing and an improved durability, and is suitable for use with REACH compliant primer coatings. It thus both provides an improved mechanical resistance to the optical article and a high safety level regarding its manufacturing process and its use. In addition, the optical article of the invention presents a low risk of hard coating cracking. Finally, the optical article of the invention preferably presents a low diffusion level.

A further object of the invention is to provide a process for the manufacture of an abrasion and/or scratch-resistant coating of an optical article according to the invention.

DETAILED DESCRIPTION

The first object of the invention is an optical article comprising a substrate having at least one main surface coated with a coating comprising at least one layer of an abrasion and/or scratch-resistant coating, wherein the abrasion and/or scratch-resistant coating is formed from a composition comprising :

(a) at least one epoxy compound bearing at least one silicon atom having at least one hydrolysable group directly linked to the silicon atom and at least one group comprising an epoxy function linked to the silicon atom through a carbon atom, and/or a hydrolysate thereof,

(b) at least one plasticizer,

(c) a silane hydrolysate having formula (I):

(I) 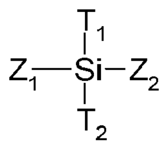

wherein $T_1$ and $T_2$ are groups which will each react to give a OH group on hydrolysis of the silane of formula (I),

$Z_1$ and $Z_2$ are organic groups bonded to the silicon atom by a Si-C bond which do not contain a group capable of reacting with the hydrolyzed silanes present in the composition, and

(d) colloidal silica,

wherein the total amount of plasticizer in the composition is lower than 10wt% of the dry extract of the total composition, and

wherein the weight ratio of silane of formula (I) to plasticizer is higher than 0.4 in the dry exact of the composition.

The present invention also relates to the abrasion and/or scratch-resistant coating itself, independently of the substrate on which it is coated.

The thickness of the abrasion and/or scratch-resistant coating on the optical article according to the invention may vary in a wide range. It may range classically from 2 micrometers to 10 micrometers, preferably from 2 micrometers to 5 micrometers.

Optical article

By "optical article" is meant a transparent optical article, preferably an optical lens or lens blank, and more preferably an ophthalmic lens or lens blank. The optical article may be coated on its convex main surface (front side), concave main surface (back/rear side), or both main surfaces with the abrasion and/or scratch-resistant coating according to the invention. As used herein, the rear face of the substrate is intended to mean the face which, when using the article, is the nearest from the wearer's eye. It is generally a concave face. On the contrary, the front face of the substrate is

the face which, when using the article, is the most distant from the wearer's eye. It is generally a convex face. The optical article can also be a piano article.

The optical article of the invention preferably presents a refractive index of 1.5.

A substrate, in the sense of the present invention, should be understood to mean an uncoated substrate, and generally has two main faces. The substrate may in particular be an optically transparent material having the shape of an optical article, for example an ophthalmic lens destined to be mounted in glasses. In this context, the term "substrate" is understood to mean the base constituent material of the optical lens and more particularly of the ophthalmic lens. This material acts as support for a stack of one or more coatings or layers.

The substrate may be made of mineral glass or organic glass, preferably organic glass. The organic glasses can be either thermoplastic materials such as polycarbonates and thermoplastic polyurethanes or thermosetting (cross-linked) materials such as diethylene glycol bis(allylcarbonate) polymers and copolymers (in particular CR-39® from PPG Industries), thermosetting polyurethanes, polythiourethanes, preferably polythiourethane resins having a refractive index of 1.60 or 1.67, polyepoxides, polyepisulfides, such as those having a refractive index of 1.74, poly(meth)acrylates and copolymers based substrates, such as substrates comprising (meth)acrylic polymers and copolymers derived from bisphenol-A, polythio(meth)acrylates, as well as copolymers thereof and blends thereof. Preferred materials for the lens substrate are polycarbonates (PC) and diethylene glycol bis(allylcarbonate) polymers, in particular substrates made of polycarbonate.

Other examples of substrates suitable to the present invention are those obtained from thermosetting polythiourethane resins, which are marketed by the Mitsui Toatsu Chemicals company as MR series, in particular MR6, MR7 and MR8 resins. These substrates as well as the monomers used for their preparation are especially described in the patents US 4,689,387, US 4,775,733, US 5,059,673, US 5,087,758 and US 5,191,055.

Prior to depositing coatings, the surface of the article is usually submitted to a physical or chemical surface activating and cleaning treatment, so as to improve the adhesion of the layer to be deposited, such as disclosed in WO 2013/013929.

The abrasion and/or scratch-resistant coating according to the invention may be deposited onto a naked substrate or onto the outermost coating layer of the substrate if the substrate is coated with at least one surface coating, such as a polarized coating, a photochromic coating or a dyed coating.

The abrasion and/or scratch-resistant coating disclosed in the present invention is particularly appropriate for optical articles comprising a substrate obtained by polymerization of diethylene glycol bis allyl carbonate, sold under the trade name CR 39® by PPG INDUSTRIES (lens ORMA® ESSILOR). It may nevertheless also be used for any other optical article which benefits from the presence of an abrasion and/or scratch-resistant coating.

The optical article that is coated with the abrasion and/or scratch-resistant coating disclosed in the present invention classically comprises a substrate and at least one layer coated on at least one surface of the substrate.

In preferred embodiments, the at least one main surface of the optical article is successively coated with an impact-resistant primer coating and an abrasion and/or scratch coating as disclosed in the present invention.

The primer coating makes it possible to improve the impact strength of the subsequent layers in the final product. In addition, it makes it possible to ensure good adhesion of the abrasion-resistant coating to the substrate.

In an embodiment, the impact-resistant primer coating is REACH compliant. This means that the impact-resistant primer coating composition is compliant with the EU REACH regulation (EC) No 1907/2006 and its more recent updates. Especially, the manufacture of the impact-resistant primer coating does not imply the use of non-REACH compliant solvents such as 1-methyl-2-pyrrolidone (NMP).

In the present invention, the primer coating is preferably formed from a composition comprising polyurethane and colloidal silica. In a preferred embodiment, the primer coating is formed from a composition comprising deionized water, polyurethane, colloidal silica and optionally at least one surfactant. Said composition is advantageous as it comprises only REACH compliant components, in particular it does not comprise non-REACH compliant solvents such as 1-methyl-2-pyrrolidone. In a specific embodiment, each of the polyurethane and/or the silica to be used to form the primer coating is prepared and/or provided in a medium comprising only REACH-compliant solvents.

In a specific embodiment, the primer coating is formed from a liquid composition comprising 60.7 wt% deionized water, 29.8wt% polyurethane such as polyurethane U 5200 (Alberdingk Boley), 9.1wt% colloidal silica such as Levasil CC401 (Akzonobel), and 0.4 wt% surfactant such as CoatOSil L77.

In an embodiment, the dried primer composition is the following: Polyurethane U 5200 (Alberdingk Boley): 87.7%vol, Colloidal silica Levasil CC401 (Akzonobel): 11.0%vol, Surfactant CoatOSil L77: 1.3%vol.

The at least one main surface of the optical article which is coated with the abrasion and/or scratch coating may be further coated with additional coating layers, such as an antireflective coating.

Antireflective coatings are well known and conventionally comprise a single-layer or multilayer stack of dielectric materials, such as SiO, $SiO_2$, $Al_2O_3$, $MgF_2$, LiF, $Si_3N_4$, $TiO_2$, $ZrO_2$, $Nb_2O_5$, $Y_2O_3$, $HfO_2$, $Sc_2O_3$, $Ta_2O_5$, $Pr_2O_3$ or their mixtures.

As is also well known, antireflective coatings are preferably multilayer coatings alternately comprising layers

of high refractive index and layers of low refractive index.

In the present patent application, a layer of the multilayer stack of the antireflective (AR) coating is said to be a layer of high refractive index (HI) when its refractive index is greater than or equal to 1.6, preferably greater than or equal to 1.7, better still greater than or equal to 1.8 and even better still greater than or equal to 1.9. A layer of the multilayer stack of the antireflective coating is said to be a layer of low refractive index (LI) when its refractive index is less than or equal to 1.54, preferably less than or equal to 1.52 and better still less than or equal to 1.50.

The various layers of the multilayer stack are preferably deposited by vacuum deposition according to one of the following techniques: i) by evaporation, optionally ion beam-assisted evaporation, ii) by ion beam sputtering, iii) by cathode sputtering or iv) by plasma-enhanced chemical vapor deposition. These different techniques are described in the works "Thin Film Processes" and "Thin Film Processes II", edited by Vossen and Kern, Academic Press, 1978 and 1991 respectively. A technique which is particularly recommended is the vacuum evaporation technique.

Generally, the HI layers have a thickness varying from 10 nm to 120 nm and the LI layers have a physical thickness varying from 10 nm to 100 nm.

Preferably, the total thickness of the antireflective coating is less than 1 $\mu$m, better still less than or equal to 500 nm and even better still less than or equal to 250 nm. The total thickness of the antireflective coating is generally greater than 100 nm, preferably greater than 150 nm.

Preferably the low index material comprises alumina-doped silica.

Preferably, the high index material comprises zircone.

In a specific embodiment, the antireflective coating is a multilayer stack comprising at least, in this order and starting with the closest layer to the abrasion and/or scratch-resistant coating, a first zircone layer, a second alumina-doped silica layer, a third zircone layer, a fourth antistatic layer (indium tin oxide ITO) and a fifth alumina-doped silica layer.

Preferably, in such embodiment, the successive layers present the following thicknesses:

- Between 17 and 30 nm for the first zircone layer, preferably between 17 and 22 nm for an antireflective coating dedicated to the concave surface of the lens, and between 23 to 30 nm for an antireflective coating dedicated to the convex surface of the lens,

- Between 20 and 24 nm for the second alumina-doped silica LI layer,

- Between 73 and 97 nm for the third zircone layer, preferably between 90 and 97 nm for an antireflective coating dedicated to the concave surface of the lens, and between 73 to 80 nm for an antireflective coating dedicated to the convex surface of the lens,

- Between 5 and 8 nm for the fourth antistatic layer, and

- Between 75 and 85 nm for the fifth alumina-doped silica layer, preferably between 75 and 80 nm for an antireflective coating dedicated to the concave surface of the lens, and between 80 to 85 nm for an antireflective coating dedicated to the convex surface of the lens.

In an embodiment, the at least one main surface of the optical article is successively coated with an impact-resistant primer coating, an abrasion and/or scratch-resistant coating as disclosed in the present invention and an antireflective coating.

The use of the abrasion and/or scratch-resistant coating of the present invention affords an increased durability and a low risk of cracking of the layers of the coating, in particular of the antireflective coating.

Herein, the term "lens" means an organic or inorganic glass lens, comprising a lens substrate, which may be coated with one or more coatings of various natures.

The term "ophthalmic lens" is used to mean a lens adapted to a spectacle frame to protect the eye and/or correct the sight. Said lens can be chosen from afocal, unifocal, bifocal, trifocal and progressive lenses. Although ophthalmic optics is a preferred field of the invention, it will be understood that this invention can be applied to optical articles of other types, such as, for example, lenses for optical instruments, in photography or astronomy, optical sighting lenses, ocular visors, optics of lighting systems, etc.

In the present description, unless otherwise specified, an optical article/material is understood to be transparent when the observation of an image through said optical article is perceived with no significant loss of contrast, that is, when the formation of an image through said optical article is obtained without adversely affecting the quality of the image. This definition of the term "transparent" can be applied to all objects qualified as such in the description, unless otherwise specified.

The term "coating" is understood to mean any layer, layer stack or film, which may be in contact with the substrate and/or with another coating, for example a sol-gel coating or a coating made of an organic resin. A coating

may be deposited or formed through various methods, including wet processing, gaseous processing, and film transfer. When a coating is coated on a substrate or on a previous coating, it is not necessarily in contact with said substrate or previous coating, intermediate layer(s) may be present between both. When a coating is coated on a previous coating, it is positioned on the side of the previous coating layer which is the furthest from the substrate.

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about".

Compound (a)

Compound (a) is at least one epoxy compound bearing at least one silicon atom having at least one hydrolysable group directly linked to the silicon atom and at least one group comprising an epoxy function linked to the silicon atom through a carbon atom, and/or a hydrolysate thereof.

In some embodiments, compound (a) is a compound of formula (II):

(II) $R_{n'}Y_mSi(X)_{4-n'-m}$,

wherein

the R groups are identical or different and represent monovalent organic groups linked to the silicon atom through a carbon atom,

the Y groups are identical or different and represent monovalent organic groups linked to the silicon atom through a carbon atom and contain at least one epoxy function,

the X groups are identical or different and represent hydrolysable groups or hydrogen atoms, and

m and n' are integers such that m is equal to 1 or 2 and n' + m = 1 or 2.

An "epoxy function" in the present invention is a group of atoms, in which an oxygen atom is directly linked to two adjacent carbon atoms or non adjacent carbon atoms comprised in a carbon containing chain or a cyclic carbon containing system. Among epoxy functions, oxirane functions are preferred, *i.e.* saturated three-membered cyclic ether groups.

An "epoxy group" is a chemical group comprising, or consisting of, the two carbon atoms and the oxygen atom of an epoxy function.

A "hydrolysable group" is a chemical group which will transform into a OH group when the compound is exposed to hydrolysis conditions.

The X groups lead to an OH group upon hydrolysis. It is worth noting that SiOH bonds may be present in the compounds of formula (II), which are considered in this case as hydrolysates. Hydrolysates also encompass siloxane salts.

The term "hydrolysate" of a silane derivative expresses the fact that it is also possible in the context of the present invention that the silane derivative has already been at least partly hydrolyzed to form silanol groups, and a certain degree of crosslinking may also have already taken place through condensation reaction of these silanol groups.

The X groups may independently and without limitation represent H, alkoxy groups $-O-R_1$, wherein $R_1$ preferably represents a linear or branched alkyl or alkoxyalkyl group, preferably a $C_1$-$C_4$ alkyl group, acyloxy groups $-O-C(O)R_3$, wherein $R_3$ preferably represents an alkyl group, preferably a $C_1$-$C_6$ alkyl group, and more preferably a methyl or ethyl group, halogen groups such as Cl and Br, amino groups optionally substituted with one or two functional groups such as an alkyl or silane group, for example the $NHSiMe_3$ group, alkylenoxy groups such as the isopropenoxy group, trialkylsiloxy groups, for example the trimethylsiloxy group.

An "alkyl group" is a linear, branched or cyclic saturated hydrocarbon group comprising from 1 to 12 carbon atoms. The hydrocarbon group may be interrupted by at least one heteroatom such as an oxygen atom, a sulfur atom

or a $NH_2$ group. Among alkyl groups may be cited the methyl, ethyl, n-propyl, iso-propyl, n-buytl, sec-butyl, isobutyl, pentyl, hexyl, cyclohexyl, heptyl, octyl, nonyl, decyl, undecyl and dodecyl groups. In some embodiments, the alkyl group comprises from 1 to 10 carbon atoms, preferably from 1 to 6 carbon atoms, in particular from 1 to 3 carbon atoms. The alkyl group may be a methyl group.

An "acyloxy group" is an alkyl group as defined above, which is linked to the rest of the molecule through a COO group.

An "alkoxy group" is an alkyl group as defined above, which is linked to the rest of the molecule through an oxygen atom.

The X groups are preferably alkoxy groups, in particular methoxy, ethoxy, propoxy or butoxy groups, more preferably methoxy or ethoxy groups. In this case, compounds of formula (II) are alkoxysilanes.

The integers n' and m define three groups of compounds of formula (II): compounds of formula $RYSi(X)_2$, compounds of formula $Y_2Si(X)_2$, and compounds of formula $YSi(X)_3$. Among these compounds, epoxysilanes having the formula $YSi(X)_3$ are preferred.

The monovalent R groups linked to the silicon atom through a Si-C bond are organic groups. These groups may be, without limitation, hydrocarbon groups, either saturated or unsaturated, preferably $C_1$-$C_{10}$ groups and better $C_1$-$C_4$ groups, for example an alkyl group, preferably a $C_1$-$C_4$ alkyl group such as methyl or ethyl, an aminoalkyl group, an alkenyl group, such as a vinyl group, a $C_6$-$C_{10}$ aryl group, for example an optionally substituted phenyl group, in particular a phenyl group substituted with one or more $C_1$-$C_4$ alkyl groups, a benzyl group, a (meth)acryloxyalkyl group, or a fluorinated or perfluorinated group corresponding to the above cited hydrocarbon groups, for example a fluoroalkyl or perfluoroalkyl group, or a (poly)fluoro or perfluoro alkoxy[(poly)alkyloxy]alkyl group.

The most preferred R groups are alkyl groups, in particular $C_1$-$C_4$ alkyl groups, and ideally methyl groups.

The monovalent Y groups linked to the silicon atom through a Si-C bond are organic groups since they contain at least one epoxy function, preferably one epoxy function. Most preferred epoxysilanes are those wherein, in formula (II), n'=0, m=1 and X is a $C_1$-$C_5$ alkoxy group, preferably $OCH_3$.

Epoxysilanes compounds of formula (II) provide a highly cross-linked matrix. The preferred epoxysilanes have an organic link between the Si atom and the epoxy function that provides a certain level of flexibility.

Preferably, the Y groups are independently selected from the group consisting of the groups of formula (III) and the groups of formula (IV):

(III) 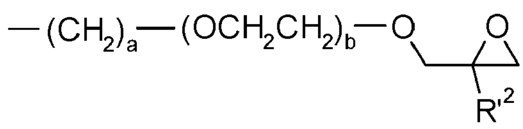

(IV) 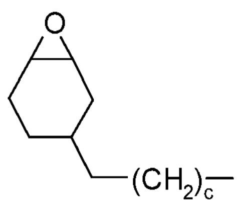

in which $R'^2$ is an alkyl group, preferably a methyl group, or a hydrogen atom, ideally a hydrogen atom, a and c are integers independently ranging from 1 to 6, and b is 0, 1 or 2.

The preferred group having formula (III) is the glycidoxypropyl group ($R'^2$ = H, a = 3, b = 0) and the preferred (3,4-epoxycyclohexyl)alkyl group of formula (IV) is the (3,4-epoxycyclohexyl)ethyl group (c = 1). The glycidoxyethoxypropyl group may also be employed ($R'^2$ = H, a = 3, b = 1).

Preferred epoxysilanes of formula (II) are epoxyalkoxysilanes, and most preferred are those having one Y group and three alkoxy X groups. In some embodiments, compound (a) is selected from the group consisting of epoxytrialkoxysilanes of formula (V) and epoxytrialkoxysilanes of formula (VI):

(V) 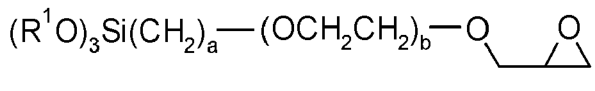

(VI) 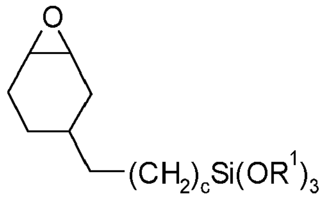

in which $R^1$ is an alkyl group having 1 to 6 carbon atoms, preferably a methyl or ethyl group, and a, b and c are as defined above.

In some embodiments, each $R^1$ is a methyl group.

In some embodiments, a is 3. In some embodiments b is 0.

In particular, compound (a) may be γ-glycidoxypropyltrimethoxysilane (GLYMO).

Examples of such epoxysilanes include but are not limited to glycidoxy methyl trimethoxysilane, glycidoxy methyl triethoxysilane, glycidoxy methyl tripropoxysilane, glycidoxy ethyl trimethoxysilane, glycidoxy ethyl triethoxysilane, glycidoxy ethyl trimethoxysilane, glycidoxy ethyl triethoxysilane, glycidoxy ethyl tripropoxysilane, glycidoxy propyl trimethoxysilane, glycidoxy propyl triethoxysilane, glycidoxy propyl tripropoxysilane, glycidoxy propyl trimethoxysilane, glycidoxy propyl triethoxysilane, glycidoxy propyl tripropoxysilane, glycidoxy propyl trimethoxysilane, glycidoxy propyl triethoxysilane, glycidoxy propyl tripropoxysilane, 2-(3,4-epoxycyclohexyl) ethyltrimethoxysilane, 2-(3,4-epoxycyclohexyl) ethyltriethoxysilane. Other useful epoxytrialkoxysilanes are described in patent documents US 4,294,950, US 4,211,823, US 5,015,523, EP 0614957, US 2009/0311518, US 2011/0058142 (compounds of formulae I, VII and VIII) and WO 94/10230.

Preferred epoxysilanes of formula (II) having one Y group and two X groups include, but are not limited to, epoxydialkoxysilanes such as glycidoxypropyl-methyldimethoxysilane, glycidoxypropyl bis(trimethylsiloxy) methylsilane, glycidoxypropyl-methyldiethoxysilane, glycidoxypropyl-methyl-diisopropenoxysilane, and glycidoxyethoxypropylmethyldimethoxysilane. When epoxy dialkoxysilanes are used, they are preferably combined with epoxytrialkoxysilanes such as those described above, and are preferably employed in lower amounts than said epoxytrialkoxysilanes.

The choice of compound (a) is generally determined by the employed system of solvents in the coating composition, as it has to be soluble or dispersible in said system of solvents, typically water, alcohols, or an aqueous composition such as a hydro-alcoholic composition. Compounds (a) from different categories may be employed.

According to one aspect of this invention, hydrolysis-polymerizable compound (a) is generally hydrolyzed before being mixed to the other components of the composition. The hydrolysis may be performed as known in the art of sol-gel processing, such as disclosed in FR 2702486 and US 4,211,823. Acidic catalysts such as hydrochloric acid or acetic acid may be used to promote the hydrolysis reaction, in the presence of water.

The above described organofunctional binders form silica organosols. After having been subjected to hydrolysis, they generate interpenetrated networks by forming silanol groups, which are capable of establishing bonds with the underlying layer and may act as adhesion promoters. They may also act as cross-linking agents towards other compounds present in the composition such as compounds (b).

Despite the epoxysilane is generally under hydrolyzed form, the amount of epoxysilane will be conventionally defined as the weight of the initial precursor before its hydrolysis. Hydrolysis of alkoxy groups liberates the associated alcohol to form silanol groups which will condense spontaneously. Preferably, the alkoxysilane is reacted with a stoichiometric amount of water to hydrolyze the hydrolysable groups, typically the alkoxy groups.

The composition preferably comprises from 5 to 60 % by weight of compounds (a), more preferably from 5 to 20 %, even more preferably from 10 to 15 % relative to the total weight of the composition.

Compounds (a) are generally present in an amount ranging from 25 to 45 %, preferably from 30 to 40 %, relative to the dry extract weight of the composition.

The dry extract weight content of a compound of the composition represents the content of this compound in the final coating. The dry extract weight can be calculated as a theoretical dry extract weight as disclosed in US 2012/0295084 or EP 614957. Typically, it is, for a hydrolysable silane compound, the calculated weight as expressed in $Q_kSiO_{(4-k)/2}$ units wherein Q is an organic moiety directly bound to the silicon atom through a Si-C bond, k is 0, 1, 2 or 3, and $Q_kSiO_{(4-k)/2}$ results from the hydrolysis of $Q_kSiR'''_{(4-k)}$ where SiR''' gives Si-OH upon hydrolysis.

The dry extract weight can also be determined experimentally. The dry extract of a compound or composition is the total weight of the compound or composition after the full removal of volatile solvent(s) at 100°C to 110°C in an oven. The dry extract is also called solids content, percent non volatile material by weight or % NVM. Traditional procedures to determine solids take 60 min at 105°C to 110°C in an oven, and require both pre-and post weighing of the sample pan and sample (ASTM designations: D2369 and D2926-80). The new procedures using the commercial Mark 3 solids analyzer purchased from Sartorius, or SMART Turbo™ purchased from CEM, take only 2 to 10 minutes, depending on the volatile/moisture content and viscosity of the material.

Compound (b)

Compound (b) is at least one plasticizer. In some embodiments of the invention, compound (b) is selected from the group consisting of an alkylene glycol diglycidyl ether, a poly(alkylene glycol) diglycidyl ether and mixtures thereof, in other words at least one ($\alpha$,$\omega$)-alkylenediol diglycidyl ether or ($\alpha$,$\omega$)-poly(alkylenediol) diglycidyl ether

An "alkylene glycol" is a diol wherein both H groups are carried by two different carbon atoms of an alkyl group. As example of alkylene glycol which diglycidyl ether can be used as compound (b) of the present invention can be cited 1,4-butanediol (BDGE).

A "polyalkylene glycol" is an oligomer or polymer obtained from polymerization of at least one alkylene glycol monomer. The polyalkylene glycol may comprise from 2 to 1,000 alkylene glycol moieties, preferably from 2 to 50 alkylene glycol moieties, in particular from 2 to 10 alkylene glycol moieties. As example of polyalkylene glycol which diglycidyl ether can be used as compound (b) of the present invention can be cited polyethylene glycol, in particular polyethylene glycol 500 (PEG 500).

Compound (b) according to the invention is a bi-functional epoxy monomer having two epoxide groups per molecule.

In a preferred embodiment, compound (b) has the following formula (VII):

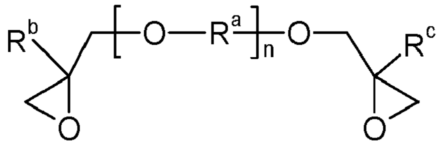
(VII)

in which $R^a$ is an alkylene group, $R^b$ and $R^c$ independently represent H or an alkyl group, n is an integer ranging from 1 to 100, preferably from 1 to 50. n is preferably lower than or equal to any one of the following values: 25, 20, 15, 10, 8, 9, 6, 4. $R_a$ is a divalent group, which may be cyclic or acyclic, linear or branched, having 2-20 carbon atoms, preferably 2-10 carbon atoms, more preferably 2-8 carbon atoms, even more preferably 2-6 carbon atoms, ideally 2-4 carbon atoms, such as ethylene, n-propylene, i-propylene, n-butylene, n-pentylene or n-hexylene. $R^a$ is preferably a linear and acyclic alkylene group and n is preferably 1, 2 or 3, more preferably 1 or 2. $R^b$ and $R^c$ are identical or different and preferably represent H or a $C_1$-$C_6$ alkyl group, preferably H or methyl, ideally H.

In one embodiment, compound (b) has the following formula (VIII):

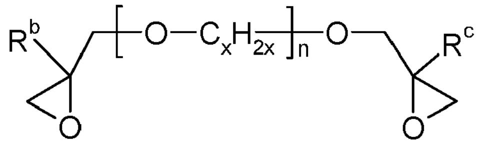
(VIII)

in which $R^b$, $R^c$ and n are such as defined above and x is an integer ranging from 2 to 20, preferably from 2 to 10, more preferably from 2 to 8, even more preferably from 2 to 6, ideally from 2 to 4.

Non-limiting examples of compounds (b) include ethylene glycol diglycidyl ether, propylene glycol diglycidyl ether, dipropylene glycol diglycidyl ether, tripropylene glycol diglycidyl ether, tetrapropylene glycol diglycidyl ether, nonapropylene glycol diglycidyl ether, diethylene glycol diglycidyl ether, triethylene glycol diglycidyl ether, tetraethylene glycol diglycidyl ether, nonaethylene glycol diglycidyl ether, 1,4-butanediol diglycidyl ether, 1,3-butanediol diglycidyl ether, 2,3-butanediol diglycidyl ether, 1,5-pentanediol diglycidyl ether, 2,4-pentanediol diglycidyl ether, 1,6-hexanediol diglycidyl ether, 2,5-hexanediol diglycidyl ether, 2-methyl-2,4-pentanediol diglycidyl ether, neopentyl glycol diglycidyl ether, cyclohexanedimethanol diglycidyl ether, 2,2-bis(4-hydroxycyclohexyl)propane diglycidyl ether, polypropylene glycol diglycidyl ether, polyethylene glycol diglycidyl ether.

Preferred compounds (b) are alkylene glycol diglycidyl ethers having an alkyl group comprising from 2 to 10 carbon atoms and poly(alkylene glycol)diglycidyl ethers.

More preferred examples of compounds (b) include polyethylene glycol diglycidyl ether, in particular polyethylene glycol 500 diglycidyl ether, 1,4-butanediol diglycidyl ether and a mixture thereof.

The composition generally comprises an amount lower than or equal to 5 % by weight of compounds (b), preferably from 0.3 to 5 % by weight, more preferably from 0.5 to 4 %, even more preferably from 0.75 to 3 % or ideally 0.9 to 2 %, relative to the total weight of the composition.

Compounds (b) are generally present in an amount lower than or equal to 10 %, typically ranging from 2 to 10

%, preferably from 3 to 8 %, relative to the dry extract weight of the composition.

Although compound (b) is used at relatively low concentrations, it is responsible for the improvement of the behavior of the resulting hard coat when deposited onto an impact-resistant primer coating, i.e. develops less or no cracks. Hard coats prepared from compositions according to the invention comprising at least one compound (b) exhibit adhesion, transparence, abrasion- and scratch-resistance properties, which are generally similar to or higher than those obtained from the corresponding compositions without any compound of formula (b).

Without wishing to be bound by any theory, the inventors believe that compounds (b) generate an organic-inorganic network structure having a higher flexibility and stability. It is believed that compounds (b) form a resin that positions between the macromolecular chains during polymerization, through condensation with the epoxide functions. The densification of the matrix will be less important than with a siloxane compound, thus generating a softened, plasticized network, which is less prone to develop cracks.

In some embodiments, compound (b) comprises a mixture of at least two plasticizers, such as a mixture of 1,4-butanediol diglycidyl ether and polyethylene glycol diglycidyl ether, such as polyethylene glycol 500 diglycidyl ether. Different plasticizers may have complementary properties and the use of a mixture of plasticizers as compound (b) guarantees that the best mechanical and optical properties performance of the plasticizers are reached even in absence of varnish maturation step.

<u>Compound (c)</u>

Compound (c) is a silane hydrolysate having formula (I):

(I) 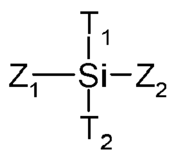

wherein $T_1$ and $T_2$ are groups which will each react to give a OH group on hydrolysis of the silane of formula (I),

$Z_1$ and $Z_2$ are organic groups bonded to the silicon atom by a Si-C bond which do not contain a group capable of reacting with the hydrolyzed silanes present in the composition, such as a SiOH group or a bridging group such as an epoxy group.

In some embodiments, each of $Z_1$ and $Z_2$ is independently selected from the group consisting of $C_1$-$C_{10}$ alkyl groups and $C_1$-$C_{10}$ aryl groups.

An "aryl group" is an unsaturated hydrocarbon group comprising a formal alternation of single and double bonds, and respecting the Hückel's aromaticity rule. The aryl group typically comprises from 6 to 14 carbon atoms. As example of aryl group can be cited the phenyl group.

In some embodiments, each of $T_1$ and $T_2$ is independently selected from the group consisting of a hydrogen atom, a halogen atom such as a chlorine atom, an acyloxy group and an alkoxy group.

In some embodiments, each of $T_1$ and $T_2$ is independently a $C_1$-$C_{10}$ alkoxy group, and each of $Z_1$ and $Z_2$ is independently selected from the group consisting of $C_1$-$C_{10}$ alkyl groups and $C_1$-$C_{10}$ aryl groups.

A preferred compound (c) is dimethyldiethoxysilane.

The composition generally comprises an amount ranging from 0.2 to 5% by weight of compounds (c), preferably from 1 to 4 % by weight, more preferably from 2 to 3.5 % relative to the total weight of the composition.

Compounds (c) are generally present in an amount ranging from 1 to 15 %, preferably from 3 to 12 %, more preferably from 6 to 10 %, relative to the dry extract weight of the composition.

<u>Compound (d)</u>

The composition further includes colloidal silica particles to increase the hardness of the coating, and optionally adapt the refractive index of the resulting coating (compound (d)).

Colloidal particle preparation requires well known methods. As used herein, "colloids" are fine particles the mean diameter of which (or the largest size of which in case of elongated particles) is less than 150 nm, more preferably less than 100 nm, dispersed within a dispersing medium such as water, an alcohol, a ketone, an ester or combinations thereof, preferably an alcohol such as methanol, ethanol or isopropanol. With such low mean particle diameter, the transparency of the coating is not affected. Preferred colloidal particle diameters range from 2 to 100 nm, from 2 to 50

nm and from 5 to 40 nm. The size of the particles in the liquid is determined by conventional methods such as light scattering, and particles size analyzer. The size of the particles in the solid is determined by tunneling electron microscope or light scattering.

In some embodiments, colloidal particles may be made of a mixture of small sized-particles, for example having a diameter of from 10 to 15 nm and of larger sized-particles, for example having a diameter of from 30 to 80 nm.

These particles may be modified by grafting an organic group onto a silicon atom.

The colloidal particles may also be porous or hollow. The preparation and use of such particles have been extensively described in the literature, in particular in the patent applications WO 2006/095469, JP 2001-233611, WO 00/37359 and JP2003-222703. Such particles are also commercially available from the Catalysts & Chemicals Industries Co. (CCIC), for example in the form of porous silica sols under the trade name THRULYA®.

The colloidal silica particles may be prepared by the Stöber method. The Stöber method is a simple and well known method comprising a hydrolysis and condensation of the ethyl tetrasilicate $Si(OC_2H_5)_4$ in ethanol catalyzed by ammonia. The method allows to obtain a silica directly in ethanol, a quasi monodispersed particle population, a controllable particle size and a particle surface ($SiO^-NH_4^+$). Silica colloids are also marketed by DuPont de Nemours under the commercial name Ludox®.

The composition preferably comprises from 1 to 40 % by weight of compound (d), more preferably from 5 to 30 %, even more preferably from 10 to 20 % or 15 to 20 %, relative to the total weight of the composition.

Compound (d) is generally present in an amount ranging from 30 to 60 %, preferably from 40 to 55 %, more preferably from 27 to 40 %, even more preferably from 28 to 35 %, relative to the dry extract weight of the composition.

Composition

The composition from which the abrasion and/or scratch-resistant coating is formed may comprise, in addition to compounds (a), (b), (c) and (d) described above, components that are classically used for forming coating compositions, especially in abrasion and/or scratch-resistant coatings. For instance, the composition may further comprise at least one of a surfactant, a catalyst and/or another additive. As examples of surfactant that can be present in the composition can be cited at least partially fluorinated organically modified polysiloxanes such as compounds of the EFKA families, in particular EFKA3031. As example of catalyst that can be present in the composition can be cited aluminium acetylacetonate.

The weight ratio of silane of formula (I) to plasticizer is higher than 0.4 in the dry exact of the composition according to the invention. A ratio higher than 0.4 ensures a low risk of fracturing of the coating stack of the optical article, especially when the total amount of (compound (c) + compound (b)) in the composition is 15 % or lower.

In a preferred embodiment, the weight ratio of silane of formula (I) to plasticizer is 1 or higher than 1 in the dry exact of the composition. A ratio higher than 1 further ensures a low level of diffusion.

In a preferred embodiment, the weight percentages of compounds (b) and (c) in the dry extract of the composition are such that

$$wt\%(compound\ b) < 15 - wt\%(compound\ c).$$

Such weight percentages ensure a low risk of fracturing throughout wear.

In a preferred embodiment, the weight percentages of compounds (b) and (c) in the dry extract of the composition are such that

$$wt\%(compound\ b) > 5 - \frac{wt\%(compound\ c)}{3}.$$

Such weight percentages ensure a low risk of hard coating cracking.

In a highly preferred embodiment, the weight percentages of compounds (b) and (c) in the dry extract of the composition are such that:

$$\frac{wt\%(compound\ c)}{wt\%\ (compound\ b)} > 0.4, \text{ preferably } \frac{wt\%(compound\ c)}{wt\%\ (compound\ b)} > 1,$$

$$wt\%(compound\ b) < 15 - wt\%(compound\ c),$$

and

$$wt\%(compound\ b) > 5 - \frac{wt\%(compound\ c)}{3}.$$

In a preferred embodiment, the composition comprises:

(a) 25 to 50% of y-glycidoxypropyltrimethoxysilane,
(b) 2 to 10% of 1,4-butanediol diglycidyl ether and/or polyethylene glycol 500 diglycidyl ether,
(c) 5 to 15% of dimethyldiethoxysilane, and
(d) 25 to 68% of colloidal silica,

wherein the % are weight% of dry extract.

In a more preferred embodiment, the composition comprises:

(a) 35.4% of γ-glycidoxypropyltrimethoxysilane,
(b) 4.9% of a mixture of 1,4-butanedioldiglycidyl ether and polyethylene glycol 500 diglycidyl ether,
(c) 8.2% of dimethyldiethoxysilane, and
(d) 48.5% of colloidal silica,

wherein the % are weight% of dry extract.

The composition is coated onto the at least one main surface of the optical article in order to obtain the optical article according to the invention. The coating may be implemented by any classical method known in the art for coating a composition onto a surface of an optical article.

<u>Manufacturing process</u>

Another object of the invention is a process for the manufacture of an abrasion and/or scratch-resistant coating on a substrate formed from a composition comprising :

(a) at least one epoxy compound bearing at least one silicon atom having at least one hydrolysable group directly linked to the silicon atom and at least one group comprising an epoxy function linked to the silicon atom through a carbon atom, and/or a hydrolysate thereof,

(b) at least one plasticizer,

(c) a silane hydrolysate having formula (I):

(I) 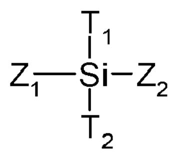

wherein $T_1$ and $T_2$ are groups which will each react to give a OH group on hydrolysis of the silane of formula (I),

$Z_1$ and $Z_2$ are organic groups bonded to the silicon atom by a Si-C bond which do not contain a group capable of reacting with the hydrolyzed silanes present in the composition,

(d) colloidal silica,

wherein the total amount of plasticizer in the composition is lower than 10wt% of the dry extract of the total composition, and

wherein the weight ratio of silane of formula (I) to plasticizer is higher than 0.4 in the dry exact of the composition,

the process comprising the steps of:

(a1) hydrolyzing compound (a) at a temperature preferably lower than 45°C to obtain hydrolyzed compound (a),

(a2) at least 1h after step (a1), adding compound (c) and compound (b) to the hydrolyzed compound (a) obtained at step (a1) to obtain a reaction mixture 1,

(a3) at least 24h after step (a1), adding colloidal silica to the reaction mixture 1 obtained at step (a2) to obtain a reaction mixture 2,

(a4) at least 30 minutes after step (a3), adding a catalyst to the reaction mixture 2 obtained in step (a3) to obtain a reaction mixture 3,

(a5) at least 30 minutes after step (a4), adding a surfactant to the reaction mixture 3 obtained in step (a4) to obtain a reaction mixture 4,

(a6) 3h after step (a5), filtering the reaction mixture 4, preferably with a 3 micrometers pore size,

(a7) recovering the filtered composition, and

(a8) coating the filtered composition obtained in step (a7) onto a substrate, preferably an optical article, to obtain a substrate coated with an abrasion and/or scratch-resistant coating.

The process for the manufacture of an abrasion and/or scratch-resistant coating on a substrate according to the invention may further comprise a further step (a1'), preferably before step (a8), comprising coating a primer coating on the substrate.

The process for the manufacture of an abrasion and/or scratch-resistant coating on a substrate according to the invention may further comprise a further step (a9), preferably after step (a8), comprising coating an antireflective coating on he abrasion and/or scratch-resistant coating.

The abrasion and/or scratch-resistant coating manufactured according to the process of the invention is preferably an abrasion and/or scratch-resistant coating as disclosed above as being coated on at least one main surface of the optical article according to the invention. Consequently, all the features disclosed above for the coating, the composition, the different compounds and/or the optical articles apply similarly to the manufacturing process of the invention.

The invention also relates to an optical article susceptible to be obtained by a process of manufacturing of the invention.

The invention also relates to the use of a coating comprising at least one layer of an abrasion and/or scratch-resistant coating, wherein the abrasion and/or scratch-resistant coating is formed from a composition comprising :

(a) at least one epoxy compound bearing at least one silicon atom having at least one hydrolysable group directly linked to the silicon atom and at least one group comprising an epoxy function linked to the silicon atom through a carbon atom, and/or a hydrolysate thereof,

(b) at least one plasticizer,

(c) a silane hydrolysate having formula (I):

(I) 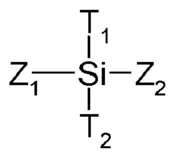

wherein $T_1$ and $T_2$ are groups which will each react to give a OH group on hydrolysis of the silane of formula (I),

$Z_1$ and $Z_2$ are organic groups bonded to the silicon atom by a Si-C bond which do not contain a group capable of reacting with the hydrolyzed silanes present in the composition, and

(d) colloidal silica,

wherein the total amount of plasticizer in the composition is lower than 10wt% of the dry extract of the total composition, and

wherein the weight ratio of silane of formula (I) to plasticizer is higher than 0.4 in the dry exact of the composition,

and an antireflective coating,

for coating an optical article, for increasing the durability and/or the resistance of the coated optical article, especially of the antireflective coating, to fracturing throughout wear.

Example

*Materials and methods*

- Risk of hard coating cracking on CR39® substrate lenses at constant polymerizing temperature

The percentage of cracks initiated was measured using ASTM D3359-93, by cutting through the hard coating, after prepolymerization 15 minutes at 75°C, 4 series of 6 lines, the lines being spaced 1 mm apart with a razor, each series being at an opposite position on the lens. Each line had two initiation points, corresponding to its two end points. Therefore, there were 48 initiation points on the lens that were intentionally created, in order to increase the tendency of the coating to crack during polymerization and to more easily detect sensitive coatings. The hard coating was then polymerized during 3 hours at 100°C. A risk is evidenced when the percentage of initiated cracks is greater than 10%.

- Evaluation of the risk of hard coating fracturing throughout wear:
  Lenses are mounted in frames and stored during one month in a climatic chamber under 25°C and 95% of humidity. These specific conditions tend to mimic the tensile stress undergone by mounted lenses in real life, leading to the fracturing of "fragile" coating stacks. Lenses are regularly checked with an arc lamp to observe the defect appearance. In accordance with wearer tests, three zones of risk were defined depending on the moment of appearance of the defect:

  - high risk: < 12 days

  - medium risk: between 12 and 22 days

  - low risk: > 22 days.

- Measurement of the diffusion level:

A beam of collimated light coming from a light source lights the optical article to be analyzed. The light transmitted by the optical article (regular and diffuse) into the integration sphere is partly picked of by a photo-sensitive sensor. Simultaneous measurements of transmission and haze are respectively obtained with the close and then open light trap.

The haze is calculated according to the following formula:

$$Haze = \frac{Tr\ diffused}{Tr\ total}\ x\ 100\%,$$

wherein Tr diffused is the light quantity transmitted and deflected at an angle of more than 2.5° in relation to the normal line (measured with the light trap open).

The haze may be measured with a numerical hazemeter such as the Haze-Gard I hazemeter commercialized by BYK.

*Example 1: Composition*

An abrasion and/or scratch-resistant coating for an optical article according to the present invention, noted B1, was prepared.

The composition of the abrasion and/or scratch-resistant coating is presented in table 1 below.

Table 1: Composition of the abrasion and/or scratch-resistant coating

| Components | wt% in dry extract | Weight (g) for 500 g |
|---|---|---|
| | | |
| Glymo | 35.4 | 87.7 |
| HCl 0,1 N | - | 27.1 |
| | | |
| Collodial silica | 48.5 | 283.3 |
| Aluminium acetonate | 2.8 | 5.0 |
| DMDES | 8.2 | 28.9 |
| PEG 500/BDGE | 4.9 | 8.5 |
| Methylethylketone | - | 59.0 |
| Surfactant | 0.1 | 0.5 |

*Example 2: Synthesis process*

The synthesis process was the following:
0.1 N hydrochloric acid was dropped in Glymo. Hydrolysis was performed at a temperature lower than 45°C. At least 1 hour after hydrolysis, DMDES and BDGE / PEG 500 were added to the reaction mixture. At least 24 hours after hydrolysis, colloidal silica was added to the reaction mixture. At least 30 minutes later, aluminum acetylacetonate was added to the reaction mixture. At least 30 minutes after the addition of aluminum acetylacetonate, methylethylketone and EFKA 3031 were added to the reaction mixture. At least 3 hours later, the reaction mixture was filtered and recovered. Dry extract and viscosity of the recovered solution were measured.

*Example 3: Performance of the coating of the invention*

The performances of the prepared abrasion and/or scratch-resistant coating were evaluated and compared to those of other abrasion and/or scratch-resistant coatings which composition is not comprised in the scope of the present invention. All performances are evaluated with a CR39® substrate coated with an impact-resistant primer coating.

The mass composition of liquid primer A1 is the following: Deionized $H_2O$: 60.7%wt, Polyurethane U 5200 (Alberdingk Boley): 29.8%wt, Colloidal silica Levasil CC401 (Akzonobel): 9.1%wt, Surfactant CoatOSil L77: 0.4%wt.

The dry extract of the primer A1 is 17 ± 1%, and its viscosity is 2.3 ± 0.1 cP. The viscosity value may be measured with a Brookfield DV2+ or DV2T viscometer. Viscosity is determined from the measure of the torque created by rotation at a determined speed of a cylinder in the fluid, at a determined temperature. The determined speed is about 100 rpm, and/or the determined temperature is about 25°C.

The dried primer A1 composition is the following: Polyurethane U 5200 (Alberdingk Boley): 87.7%vol, Colloidal silica Levasil CC401 (Akzonobel): 11.0%vol, Surfactant CoatOSil L77: 1.3%vol.

The synthesis process of the primer A1 composition is the following :colloidal silica is added in water with a controlled flow. At least one hour later, polyurethane is added in reaction mixture with a controlled flow. At least 30 minutes later, surfactant is added to the reaction mixture. At least 1 hour later, dry extract and viscosity of the solution are measured. The reaction mixture is then filtered and recovered.

Comparative primer A2 is as described in patent application WO2013/004954. Said primer coating is not REACH compliant.

Hard coats B2 to B6 are obtained with synthesis processes similar to that of example 2, by varying the amounts of DMDES and/or PEG500 or BDGE.

The risk of fracturing throughout wear is evaluated with an anti-reflective coating comprising in this order and starting with the closest layer to the abrasion and/or scratch-resistant coating: a first zircone layer, a second alumina-doped silica layer, a third zircone layer, a fourth antistatic layer (ITO) and a fifth alumina-doped silica layer.

The successive layers present the following thicknesses:

- For the first zircone layer, between 17 and 22 nm for an antireflective coating dedicated to the concave surface of

the lens, and between 23 to 30 nm for an antireflective coating dedicated to the convex surface of the lens,

- Between 20 and 24 nm for the second alumina-doped silica LI layer,
- For the third zircone layer between 90 and 97 nm for an antireflective coating dedicated to the concave surface of the lens, and between 73 to 80 nm for an antireflective coating dedicated to the convex surface of the lens,
- Between 5 and 8 nm for the fourth antistatic layer, and
- for the fifth alumina-doped silica layer, between 75 and 80 nm for an antireflective coating dedicated to the concave surface of the lens, and between 80 to 85 nm for an antireflective coating dedicated to the convex surface of the lens.

The cracking is evaluated for a polymerization of 3 hours at 100°C. Results are presented in table 2 below.

| Primer | Hard coat | DMDES (%) | PEG 500 or BDGE (%) | REACH compliant bilayer (primer + hard coat) | Coating cracking | Risk of fracturing throughout wear | Diffusion level |
|---|---|---|---|---|---|---|---|
| A1 | B1 | 8.2 | 4.9 | Yes | No | Low | Low |
| A2 | B2 | 13.1 | 0.0 | No | Yes | Low | Low |
| A1 | B2 | 13.1 | 0.0 | Yes | Yes | Low | Low |
| A1 | B3 | 0.0 | 0.0 | Yes | Yes | High | Medium |
| A1 | B4 | 0.0 | 13.2 | Yes | No | Medium | High |
| A1 | B5 | 11.6 | 7.8 | Yes | No | Medium | Low |
| A1 | B6 | 3.9 | 7.8 | Yes | No | Low | Medium |

The coatings comprising primer A1 and hard coat B1, and primer A1 and hard coat B6 are according to the invention. They both present no cracking of the coating, REACH compliance and a low risk of fracturing throughout wear. They further present a low or medium diffusion level. A medium diffusion level is less detrimental to the properties of the optical article than a medium risk of fracturing throughout wear as this last feature is really detrimental to the quality of the optical article.

The coatings of the invention present no cracking, and a low or medium risk of fracturing throughout wear. The best performances are obtained with coating (A1+B1) according to the invention, which is such that

$$\frac{wt\%(compound\ c)}{wt\%\ (compound\ b)} > 1,$$

$$wt\%(compound\ b) < 15 - wt\%(compound\ c),$$

and

$$wt\%(compound\ b) > 5 - \frac{wt\%(compound\ c)}{3}.$$

Conversely, coatings which do not comprise the plasticizer (PEG500/BDGE) and the silane hydrolysate (DMDES) in ratios according to the invention present coating cracking without adaptation of the polymerization temperature when they are combined to a primer (A2+B2, A1+B2, A1+B3), and/or a high or medium risk of fracturing throughout wear (A1+B3, A1+B4,A1+B5).

In addition, the good performances can be obtained with the hard coats B1 and B6 of the invention even when said hard coats are used in combination with a REACH-compliant primer coating such as A1.

Consequently, the coated optical articles according to the invention may present both high mechanical performance and REACH compliance.

## Claims

1. Optical article comprising a substrate having at least one main surface coated with an abrasion and/or scratch-resistant coating, wherein the abrasion and/or scratch-resistant coating is formed from a composition comprising :

   (a) at least one epoxy compound bearing at least one silicon atom having at least one hydrolysable group directly linked to the silicon atom and at least one group comprising an epoxy function linked to the silicon atom through a carbon atom, and/or a hydrolysate thereof,
   (b) at least one plasticizer,
   (c) a silane hydrolysate having formula (I):

   (I) 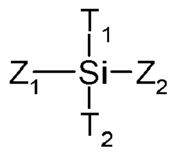

   wherein $T_1$ and $T_2$ are groups which will each react to give a OH group on hydrolysis of the silane of formula (I), $Z_1$ and $Z_2$ are organic groups bonded to the silicon atom by a Si-C bond which do not contain a group capable of reacting with the hydrolyzed silanes present in the composition,

   (d) colloidal silica,

   wherein the total amount of plasticizer in the composition is lower than 10wt% of the dry extract of the total composition, and
   wherein the weight ratio of silane of formula (I) to plasticizer is higher than 0.4 in the dry exact of the composition.

2. Optical article according to claim 1, wherein the weight% of compounds (b) and (c) in the dry extract of the composition are such that

$$\frac{wt\%(compound\ c)}{wt\%\ (compound\ b)} > 0.4,$$

$$wt\%(compound\ b) < 15 - wt\%(compound\ c),$$

   and

$$wt\%(compound\ b) > 5 - \frac{wt\%(compound\ c)}{3}.$$

3. Optical article according to claim 1 or 2, wherein compound (b) is selected from the group consisting of alkylene glycol diglycidyl ethers having an alkyl group comprising from 2 to 10 carbon atoms and poly(alkylene glycol) diglycidyl ether.

4. Optical article according to claim 3, wherein compound (b) is selected from the group consisting of 1,4-butanediol diglycidyl ether, polyethylene glycol 500 diglycidyl ether and a mixture thereof.

5. Optical article according to anyone of claims 1 to 4, wherein in formula (I) of compound (c) each of $T_1$ and $T_2$ is independently a $C_1$-$C_{10}$ alkoxy group, and each of $Z_1$ and $Z_2$ is independently selected from the group consisting of $C_1$-$C_{10}$ alkyl groups and $C_1$-$C_{10}$ aryl groups.

6. Optical article according to claim 5, wherein compound (c) is dimethyldiethoxysilane.

**7.** Optical article according to anyone of claims 1 to 6, wherein the at least one main surface is successively coated with an impact-resistant primer coating and an abrasion and/or scratch coating as defined in anyone of claims 1 to 6.

**8.** Optical article according to any one of claims 1 to 7, wherein compound (a) is a compound of formula (II):

(II) $R_{n'}Y_mSi(X)_{4-n'-m}$,

wherein

the R groups are identical or different and represent monovalent organic groups linked to the silicon atom through a carbon atom,
the Y groups are identical or different and represent monovalent organic groups linked to the silicon atom through a carbon atom and contain at least one epoxy function,
the X groups are identical or different and represent hydrolysable groups or hydrogen atoms, and
m and n' are integers such that m is equal to 1 or 2 and n' + m = 1 or 2.

**9.** Optical article according to claim 8, wherein the Y groups are independently selected from the group consisting of the groups of formula (III) and the groups of formula (IV):

(III)

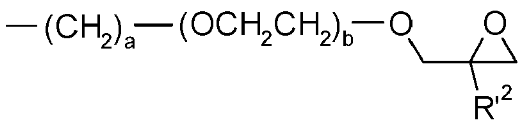

(IV)

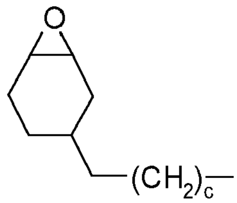

in which $R'^2$ is an alkyl group, preferably a methyl group, or a hydrogen atom, ideally a hydrogen atom, a and c are integers independently ranging from 1 to 6, and b is 0, 1 or 2.

**10.** Optical article according to claim 8 or 9, wherein compound (a) is selected from the group consisting of epoxytrialkoxysilanes of formula (V) and epoxytrialkoxysilanes of formula (VI):

(V)

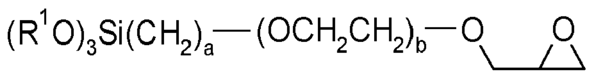

(VI)

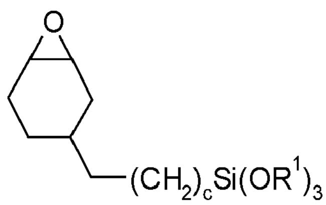

in which $R^1$ is an alkyl group having 1 to 6 carbon atoms, a and c are integers independently ranging from 1 to 6, and b is 0, 1 or 2.

**11.** Optical article according to claim 10, wherein compound (a) is γ-glycidoxypropyltrimethoxysilane.

**12.** Optical article according to anyone of claims 1 to 11, wherein the abrasion and/or scratch-resistant coating is formed from a composition comprising :

(a) 25 to 50% of y-glycidoxypropyltrimethoxysilane,
(b) 2 to 10% of 1,4-butanediol diglycidyl ether and/or polyethylene glycol 500 diglycidyl ether,
(c) 5 to 15% of dimethyldiethoxysilane, and
(d) 25 to 68% of colloidal silica,

wherein the % are weight% of dry extract.

**13.** Optical article according to anyone of claims 1 to 12, wherein the abrasion and/or scratch-resistant coating is formed from a composition comprising :

(a) 35.4% of y-glycidoxypropyltrimethoxysilane,
(b) 4.9% of a mixture of 1,4-butanediodiglycidyl ether and polyethylene glycol 500 diglycidyl ether,
(c) 8.2% of dimethyldiethoxysilane, and
(d) 48.5% of colloidal silica,

wherein the % are weight% of dry extract.

**14.** Optical article according to anyone of claims 1 to 13, wherein at least one main surface of the optical article is successively coated with an impact-resistant primer coating and the abrasion and/or scratch coating, and the dried primer comprises 87.7 vol% polyurethane, 11.0 vol% colloidal silica and 1.3 vol% surfactant.

**15.** Process for the manufacture of an abrasion and/or scratch-resistant coating on a substrate formed from a composition comprising :

(a) at least one epoxy compound bearing at least one silicon atom having at least one hydrolysable group directly linked to the silicon atom and at least one group comprising an epoxy function linked to the silicon atom through a carbon atom, and/or a hydrolysate thereof,
(b) at least one plasticizer,
(c) a silane hydrolysate having formula (I):

(I) 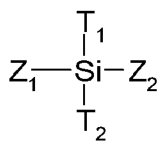

wherein $T_1$ and $T_2$ are groups which will each react to give a OH group on hydrolysis of the silane of formula (I), $Z_1$ and $Z_2$ are organic groups bonded to the silicon atom by a Si-C bond which do not contain a group capable of reacting with the hydrolyzed silanes present in the composition,

(d) colloidal silica,

wherein the total amount of plasticizer in the composition is lower than 10wt% of the dry extract of the total composition, and
wherein the weight ratio of silane of formula (I) to plasticizer is higher than 0.4 in the dry exact of the composition,

the process comprising the steps of:

(a1) hydrolyzing compound (a) at a temperature preferably lower than 45°C to obtain hydrolyzed compound (a),
(a2) at least 1h after step (a1), adding compound (c) and compound (b) to the hydrolyzed compound (a) obtained at step (a1) to obtain a reaction mixture 1,
(a3) at least 24h after step (a1), adding colloidal silica to the reaction mixture 1 obtained at step (a2) to obtain

a reaction mixture 2,
(a4) at least 30 minutes after step (a3), adding a catalyst to the reaction mixture 2 obtained in step (a3) to obtain a reaction mixture 3,
(a5) at least 30 minutes after step (a4), adding a surfactant to the reaction mixture 3 obtained in step (a4) to obtain a reaction mixture 4,
(a6) 3h after step (a5), filtering the reaction mixture 4,
(a7) recovering the filtered composition, and
(a8) coating the filtered composition obtained in step (a7) onto a substrate.

Europäisches Patentamt
European Patent Office
Office européen des brevets

# EUROPEAN SEARCH REPORT

Application Number
EP 20 30 5617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | WO 2016/005782 A1 (ESSILOR INT [FR])<br>14 January 2016 (2016-01-14)<br>* claims 1,15 *<br>* paragraph [0106] *<br>* tables 1-4 *<br>----- | 1,2,<br>5-11,15<br>12-14 | INV.<br>G02B1/04<br>C09D183/06 |
| Y | EP 3 382 429 A1 (ESSILOR INT [FR])<br>3 October 2018 (2018-10-03)<br>* table 2 *<br>----- | 12-14 | |

TECHNICAL FIELDS SEARCHED (IPC)

G02B
C08G
C09D
C08L
C08K

The present search report has been drawn up for all claims

1

| Place of search | Date of completion of the search | Examiner |
|---|---|---|
| The Hague | 22 October 2020 | Queste, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 30 5617

This annex lists the patent family members relating to the patent documents cited in the above-mentioned European search report. The members are as contained in the European Patent Office EDP file on
The European Patent Office is in no way liable for these particulars which are merely given for the purpose of information.

22-10-2020

| Patent document cited in search report | Publication date | Patent family member(s) | Publication date |
|---|---|---|---|
| WO 2016005782 A1 | 14-01-2016 | BR 112017000422 A2 | 07-11-2017 |
| | | CN 106536643 A | 22-03-2017 |
| | | EP 3167017 A1 | 17-05-2017 |
| | | US 2017158878 A1 | 08-06-2017 |
| | | WO 2016005782 A1 | 14-01-2016 |
| EP 3382429 A1 | 03-10-2018 | CN 110431451 A | 08-11-2019 |
| | | EP 3382429 A1 | 03-10-2018 |
| | | EP 3602149 A1 | 05-02-2020 |
| | | US 2020096674 A1 | 26-03-2020 |
| | | WO 2018178106 A1 | 04-10-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013004954 A
- US 6187444 B
- US 4689387 A
- US 4775733 A
- US 5059673 A
- US 5087758 A
- US 5191055 A
- WO 2013013929 A
- US 4294950 A
- US 4211823 A
- US 5015523 A
- EP 0614957 A
- US 20090311518 A
- US 20110058142 A
- WO 9410230 A
- FR 2702486
- US 20120295084 A
- EP 614957 A
- WO 2006095469 A
- JP 2001233611 A
- WO 0037359 A
- JP 2003222703 A


### Non-patent literature cited in the description


- *Thin Film Processes,* 1978
- Thin Film Processes II. Academic Press, 1991